# EUROPÄISCHE PATENTSCHRIFT

(11) **EP 4 179 189 B1**
(45) Veröffentlichungstag und Bekanntmachung des Hinweises auf die Patenterteilung: **20.08.2025**
(21) Anmeldenummer: 21735273.1
(22) Anmeldetag: 23.06.2021
(51) Int. Cl.: F02B 19/10, F02B 19/12, F02B 19/08, F02B 19/18, F02B 23/10

(54) **VORKAMMERZÜNDKERZE MIT OPTIMIERTER KAPPE SOWIE BRENNKRAFTMASCHINE**
PRECHAMBER SPARK PLUG WITH OPTIMIZED CAP AND COMBUSTION ENGINE
CHAMBRE BOUGIE D'ALLUMAGE AVEC BOUCHON OPTIMISÉ ET MOTEUR À COMBUSTION

(30) Priorität: 08.07.2020 DE 102020208578
(43) Veröffentlichungstag der Anmeldung: 17.05.2023
(73) Patentinhaber: Robert Bosch GmbH, 70442 Stuttgart (DE)
(72) Erfinder: STEIDTEN, Thomas, 71642 Ludwigsburg (DE); KASKE, Stephan, 75447 Sternenfels Diefenbach (DE); BLANKMEISTER, Matthias, 42579 Heiligenhaus (DE)
(86) Internationale Anmeldenummer: PCT/EP2021/067099
(87) Internationale Veröffentlichungsnummer: WO 2022/008242

(56) Entgegenhaltungen:
- US-A1- 2013 206 122
- US-A1- 2016 053 670
- US-A1- 2016 160 742
- US-A1- 2018 187 590

## Beschreibung

### Stand der Technik

Die vorliegende Erfindung betrifft eine Vorkammerzündkerze mit einer optimierten Kappe sowie eine Brennkraftmaschine mit einer derartigen Vorkammerzündkerze.

Vorkammerzündkerzen sind aus dem Stand der Technik in unterschiedlichen Ausgestaltungen bekannt. Eine Vorkammer der Vorkammerzündkerze wird üblicherweise mit einer Kappe gegenüber einem Brennraum einer Brennkraftmaschine abgeschirmt. In der Kappe sind dabei mehrere Durchgangslöcher vorgesehen, so dass einerseits eine Spülung der Vorkammer möglich ist und andererseits nach einer erfolgten Zündung in der Vorkammer Fackelstrahlen durch die Durchgangslöcher in den Brennraum der Brennkraftmaschine gelangen können, um ein dort befindliches Kraftstoff-LuftGemisch zu entzünden. Somit muss einerseits sichergestellt werden, dass ein zündfähiges Gemisch in der Vorkammer zum Zündzeitpunkt vorhanden ist und andererseits muss sichergestellt werden, dass der im Brennraum befindliche Kraftstoff möglichst vollständig verbrennt, um Abgasvorschriften zu erfüllen und Kraftstoffverbräuche der Brennkraftmaschine zu optimieren.

US 2016/053670 A1 offenbart eine vorbekannte Vorkammerzündkerze.

### Offenbarung der Erfindung

Die erfindungsgemäße Vorkammerzündkerze mit den Merkmalen des Anspruchs 1 weist demgegenüber den Vorteil auf, dass einerseits eine sehr gute Spülung einer Vorkammer der Vorkammerzündkerze in einer Kappe möglich ist und andererseits sichergestellt ist, dass zum Zündzeitpunkt der Vorkammerzündkerze ein zündfähiges Gemisch in der Vorkammer vorhanden ist. Dies wird erfindungsgemäß dadurch erreicht, dass die Vorkammerzündkerze ein Gehäuse und eine Kappe mit wenigstens einem Durchgangsloch mit einer Lochmittelachse aufweist. Die Kappe ist an einem zum Gehäuse gerichteten Bereich mit einem Rücksprung ausgebildet. Hierbei ist ein Abstand A von der Lochmittelachse des Durchgangslochs an einem zur Außenseite des Durchgangslochs gerichteten Austrittspunkt auf der Lochmittelachse bis zum Rücksprung in einem Bereich von A = 2mm bis 7mm. Weiterhin ist ein erster Winkel α zwischen einer Mittelachse X-X der Vorkammerzündkerze und der Lochmittelachse in einem Bereich von 30° bis 70°. Durch den Abstand zwischen dem Austrittspunkt auf der Lochmittelachse und dem Rücksprung an der Kappe wird sichergestellt, dass das Durchgangsloch im montierten Zustand in einem Zylinderkopf nicht zu nah und nicht zu weit von einer einen Brennraum einer Brennkraftmaschine begrenzenden Zylinderkopfwand entfernt ist. In Kombination mit dem Winkel α wird ferner sichergestellt, dass sich das Durchgangsloch hervorragend für eine Spülung der Vorkammer in der Kappe eignet, da der Winkel α so gestaltet ist, dass ein für eine Spülung der Vorkammer notwendiger Gaseintritt des Spülgases optimiert ist.

Die Unteransprüche zeigen bevorzugte Weiterbildungen der Erfindung.

Vorzugsweise ist der Abstand A ein eine im Bereich von 4mm bis 7mm und der Winkel α in einem Bereich von 30° bis 50°.

Weiter bevorzugt ist der Abstand A in einem Bereich von 5mm bis 7mm und der Winkel α in einem Bereich von 30° bis 40°.

Gemäß einer weiteren bevorzugten Ausgestaltung der Erfindung liegen alle Durchgangsöffnungen in der Kappe mit ihrem jeweiligen Austrittspunkt auf der Lochmittelachse in einer gemeinsamen Ebene E. Dadurch wird eine hervorragende Spülung der Vorkammer erreicht und insbesondere sichergestellt, dass die Vorkammerzündkerze auch für unterschiedliche Geometrien unterschiedlicher Brennkraftmaschinenhersteller geeignet ist. Die Ebene E ist vorzugsweise senkrecht zur Mittelachse X-X der Vorkammerzündkerze.

Wenn die Vorkammerzündkerze eingerichtet ist, in einer Brennkraftmaschine verwendet zu werden, in welcher eine Tumbleströmung beim Ladungswechsel erzeugt wird, ist eines der Durchgangslöcher der Kappe bevorzugt derart eingerichtet, dass im montierten Zustand der Vorkammerzündkerze ein Teil der Tumbleströmung direkt in das Durchgangsloch strömt.

Weiter bevorzugt ist die Lochmittelachse des Durchgangslochs sowie ein am Gehäuse der Vorkammerzündkerze angeordneter Gewindeanfang eines Außengewindes und die Mittelachse X-X der Vorkammerzündkerze in einer gemeinsamen Ebene angeordnet. Dadurch kann sichergestellt werden, dass das Durchgangsloch in einer richtigen Position zum Gewindeanfang des Gewindes und zur Mittelachse der Vorkammerzündkerze positioniert ist, damit, wenn die Vorkammerzündkerze in einem Zylinderkopf eingeschraubt ist, eine Endposition des Durchgangslochs, welches hauptsächlich zum Einlass des Spülgases für die Vorkammer während des Ladungswechsels vorgesehen ist, ein optimaler Spülvorgang möglich ist.

Die Erfindung betriff ferner eine Brennkraftmaschine umfassend einen Brennraum, einen hin- und herbewegbaren Kolben sowie einen Injektor zum Einbringen eines Kraftstoffs in den Brennraum, insbesondere direkt in den Brennraum und eine erfindungsgemäße Vorkammerzündkerze. Die Brennkraftmaschine mit der erfindungsgemäßen Vorkammerzündkerze weist dabei die entsprechenden Vorteile der Vorkammerzündkerze auf und ermöglicht einen abgasreduzierten und verbrauchsoptimierten Betrieb, da insbesondere eine Spülung der Vorkammerzündkerze optimal möglich ist.

Besonders bevorzugt weist die Brennkraftmaschine einen Injektor auf, welcher derart ausgelegt ist, dass eine Mittelachse eines Spraykegels des Injektors, welcher in den Brennraum einspritzt, in einem zweiten Winkel β zur Mittelachse X-X der Vorkammerzündkerze in einem Bereich von 30° bis 70° liegt. Besonders bevorzugt liegt die Mittelachse des Spraykegels dabei in einem Winkel β = 60°.

Weiter bevorzugt wird im Brennraum eine Tumbleströmung während eines Ladungswechsels derart erzeugt, dass zumindest ein Teil der Tumbleströmung direkt auf das Durchgangsloch der Vorkammerzündkerze gerichtet ist, welches im Abstand A und im Winkel α zur Mittelachse X-X entsprechend der erfindungsgemäßen Vorkammerzündkerze angeordnet ist.

Weiter bevorzugt ist die Vorkammerzündkerze im Wesentlichen mittig, insbesondere genau mittig, am Brennraum der Brennkraftmaschine angeordnet und der Injektor zum Einbringen des Kraftstoffs ist seitlich an der Vorkammerzündkerze angeordnet. Besonders bevorzugt ist der Injektor dabei am Zylinderkopf zwischen einem Auslassventil und der Vorkammerzündkerze angeordnet. Weiter bevorzugt kann der Kolben zur Erzeugung der Tumbleströmung eine oder mehrere Vertiefungen oder einen vorstehenden Dom oder dergleichen aufweisen.

### Kurze Beschreibung der Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Schnittansicht einer Brennkraftmaschine mit einer Vorkammerzündkerze gemäß einem bevorzugten Ausführungsbeispiel der Erfindung und
- Figur 2: eine Teilschnittansicht einer Kappe der Vorkammerzündkerze von Figur 1.

### Ausführungsform der Erfindung

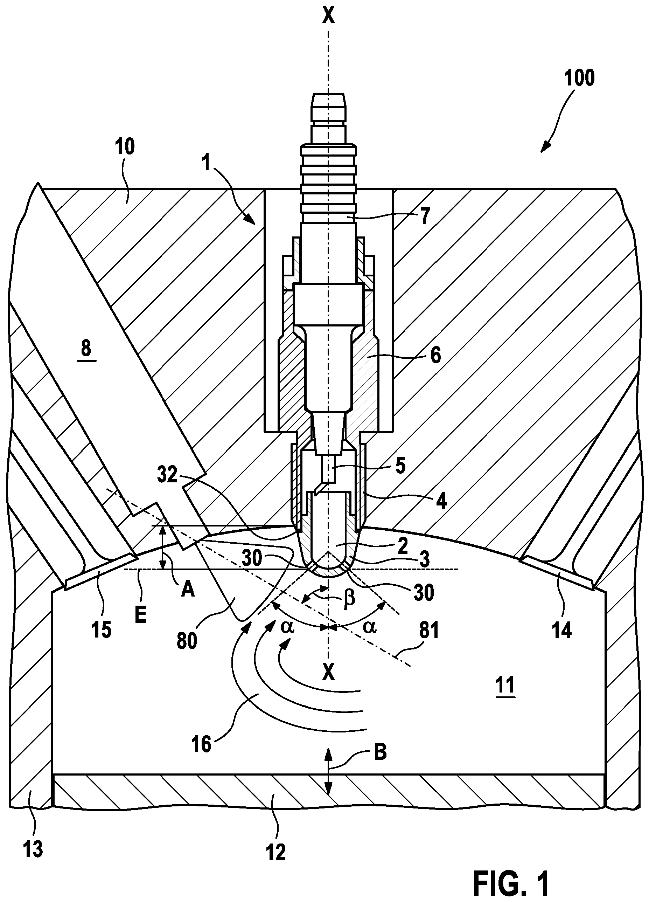

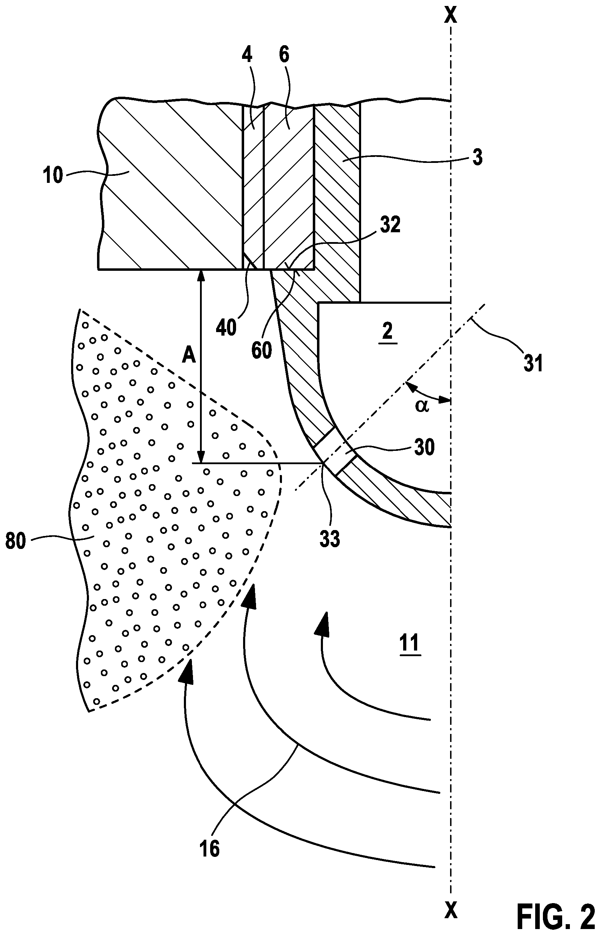

Nachfolgend wird unter Bezugnahme auf die Figuren 1 und 2 eine Vorkammerzündkerze 1 einer Brennkraftmaschine gemäß einem bevorzugten Ausführungsbeispiel der Erfindung im Detail beschrieben.

Wie aus Figur 1 ersichtlich ist, umfasst die Vorkammerzündkerze 1 eine Vorkammer 2, welche durch eine im Schnitt U-förmige Kappe 3 definiert ist. Die Kappe 3 ist an einem Gehäuse 6 der Vorkammerzündkerze beispielsweise mittels einer Schweißverbindung fixiert.

Weiter umfasst die Vorkammerzündkerze 1 eine Elektrode 5 und einen Isolator 7. Am Gehäuse 6 ist am Außenumfang an einem zum Brennraum 11 gerichteten Ende 60 ein Außengewinde vorgesehen. Das Außengewinde 4 ist bis zur montierten Kappe 3 ausgebildet und dient zur Fixierung der Vorkammerzündkerze 1 in einem Zylinderkopf 10.

Die Kappe 3 weist mehrere Durchgangslöcher 30 auf, welche jeweils in einem ersten Winkel α zu einer Mittelachse X-X der Vorkammerzündkerze 1 angeordnet sind. Die Durchgangslöcher 30 dienen einerseits dazu, eine Spülung der Vorkammer 2 zu ermöglichen und andererseits nach einer Zündung mittels der Elektrode 5 eine Entflammung eines Kraftstoff-Luft-Gemischs zuerst innerhalb der Vorkammer 2 und dann durch die Durchgangslöcher 30 mittels sogenannter Fackelstrahlen im Brennraum 11 zu ermöglichen. In Fig. 1 ist schematisch ein Injektor 8 dargestellt, welcher ein kegelförmiges Spray 80 aus Kraftstoff im Brennraum 11 erzeugt.

Das Durchgangsloch 30 ist eine Durchgangsbohrung mit kontinuierlichem Durchmesser.

In Figur 1 ist weiterhin schematisch ein Zylinder 13 mit einem Kolben 12, welcher wie durch den Doppelpfeil B angedeutet, sich im Zylinder 13 hin- und herbewegt. Ferner ist ein Einlassventil 14 und ein Auslassventil 15 vorgesehen. Der Injektor 8 ist dabei zwischen dem Auslassventil 15 und der Vorkammerzündkerze 1 angeordnet.

Wie weiter aus Figur 2 ersichtlich ist, welche im Detail die Kappe 3 der Vorkammerzündkerze 1 zeigt, weist die Kappe 3 einen radial nach innen gerichteten Rücksprung 32 auf. Die Kappe 3 liegt dabei am Rücksprung 32 am stirnseitigen Ende 60 des Gehäuses 6 an. Eine Fixierung kann beispielsweise mittels einer Schweißverbindung erfolgen.

In Figur 2 ist ferner eine Lochmittelachse 31 eines Durchgangslochs 30 dargestellt. Dieses gezeigte Durchgangsloch 30 ist eines von mehreren Durchgangslöchern 30 in der Kappe 3 und ist mit kürzestem Abstand zum Injektor 8 angeordnet. Dadurch wird dieses Durchgangsloch 30 dazu verwendet, eine Spülung der Vorkammer 2 bei einem Hub des Kolbens zu ermöglichen, um in die Vorkammer 2 ein zündfähiges Gemisch einzubringen.

Wie weiter aus Figur 2 ersichtlich ist, ist ein Austrittspunkt 33 auf der Lochmittelachse 31 definiert, welcher an der zum Brennraum 11 gerichteten Seite des Durchgangslochs 30 angeordnet ist. Die Lochmittelachse 31 definiert, wie schon oben dargelegt, den ersten Winkel α. Der Winkel α ist vorzugsweise in einem Bereich von 30° bis 50° und beträgt in diesem Ausführungsbeispiel 35°.

Wie weiter aus Figur 1 ersichtlich ist, ist ein Abstand A in Axialrichtung der Mittelachse X-X zwischen dem Austrittspunkt 33 und dem Rücksprung 32 definiert. Dieser Abstand A ist in einem Bereich von 2mm bis 7mm und ist in diesem Ausführungsbeispiel 6mm lang.

Ferner ist der Brennraum 11 geometrisch derart ausgelegt, dass beim Bewegen des Kolbens 12 eine Tumbleströmung 16 erzeugt wird. Diese Tumbleströmung 16 stellt sicher, dass ein Gasaustausch zwischen dem Brennraum 11 und der Vorkammer 2 ermöglicht wird, insbesondere um nach einer erfolgten Zündung wieder ein zündfähiges Gemisch in die Vorkammer 2 einzubringen. Wie aus Figur 2 ersichtlich ist, ist die Tumbleströmung 16 derart erzeugt, dass ein Teil der Tumbleströmung 16 direkt auf das Durchgangsloch 30 der Kappe 3 gerichtet ist. Somit kann Gasgemisch aus der Brennkammer 11 direkt durch das Durchgangsloch 30 in die Vorkammer 2 eingebracht werden.

Die Vorkammerzündkerze 1 ist dabei mittig am Brennraum 11 angeordnet und besonders bevorzugt exakt in einer Mittelachse des Kolbens 12.

Weiterhin liegen die Lochmittelachse 31 des Durchgangslochs 30, welches am nächsten zum Injektor 8 angeordnet ist, sowie die Mittelachse X-X der Vorkammerzündkerze 1 und ein Gewindeanfang 40 des Außengewindes 4 in einer gemeinsamen Ebene. Diese Ebene ist die Schnittebene in Figur 2.

Das durch den Injektor 8 erzeugte kegelförmige Spray 80 weist eine Mittelachse 81 auf. Wie aus Figur 1 ersichtlich ist, ist die Mittelachse 81 des kegelförmigen Sprays 80 in einem zweiten Winkel β zur Mittelachse der Vorkammerzündkerze 1 angeordnet. Wie weiter aus Figur 1 ersichtlich ist, fallen dabei eine Mittelachse des Injektors und die Mittelachse 81 des kegelförmigen Sprays 80 auseinander. Der zweite Winkel β beträgt in diesem Ausführungsbeispiel 60°.

Ferner liegen alle Durchgangsöffnungen 30 der Kappe 3 mit ihrem jeweiligen Austrittspunkt 33 auf ihrer jeweiligen Lochmittelachse 31 in einer gemeinsamen Ebene E, welche senkrecht zur Axialrichtung X-X der Vorkammerzündkerze ist.

Somit kann die Vorkammer 2 der Vorkammerzündkerze 1 im Vergleich mit dem Stand der Technik besser ausgespült werden und ein zündfähiges Kraftstoff-LuftGemisch besser in die Vorkammer 2 in der Kappe 3 eingebracht werden.

Dadurch ergibt sich eine verbesserte Zündung innerhalb der Vorkammer 2, was zu einer schnelleren Verbrennung des Kraftstoff-Luft-Gemischs in der Vorkammer 2 führt. Durch die deutlich schnellere Verbrennung in der Vorkammer 2 können dann die Fackelstrahlen früher und weiter in den Brennraum 11 der Brennkraftmaschine 100 gelangen. Dies führt zu einer schnelleren und effektiveren Entflammung des Kraftstoff-Luft-Gemischs im Brennraum 11 und resultiert in einer schnelleren und vollkommeneren Verbrennung im Brennraum 11. Dadurch wird eine Kraftstoffausnutzung im Brennraum 11 sowie ein Abgasverhalten der Brennkraftmaschine deutlich verbessert.

Weiterhin kann durch die Orientierung des am nächsten zum Injektor 8 liegenden Durchgangslochs 30 in Verbindung mit dem Gewindeanfang 40 des Außengewindes 4 der Vorkammerzündkerze 1 eine exakte Positionierung dieses Durchgangslochs 30 ermöglicht werden. Eine exakte Positionierung der Austrittspunkte 33 an den Durchgangslöchern 30 wird durch ein vollständiges Einschrauben der Vorkammerzündkerze 1 in den Zylinderkopf 10 erreicht.

## Patentansprüche

1. Vorkammerzündkerze mit einer Mittelachse (X-X), umfassend
- ein Gehäuse (6),
- eine Kappe (3), welche zumindest teilweise eine Vorkammer (2) definiert und welche mehrere Durchgangslöcher (30) aufweist, welche eingerichtet sind, eine Verbindung zwischen der Vorkammer (2) und einem Brennraum (11) einer Brennkraftmaschine herzustellen, wobei die Durchgangslöcher (3) jeweils eine Lochmittelachse (31) aufweisen,
- wobei die Kappe (3) an einem zum Gehäuse (6) gerichteten Bereich einen radial nach innen gerichteten Rücksprung (32) aufweist, welcher an einem brennraumseitigen Ende (60) des Gehäuses (6) am Gehäuse (6) anliegt,
- **dadurch gekennzeichnet, dass** ein parallel zur Mittelachse (X-X) gemessener Abstand (A) sich von einem auf der Lochmittelachse (31) liegenden Austrittspunkt (33) eines Durchgangslochs (30) an der Außenseite der Kappe (3) bis zum Rücksprung (32) der Kappe (3) erstreckt und in einem Bereich von 2 mm bis 7 mm liegt und
- dass ein erster Winkel (α) zwischen der Mittelachse (X-X) der Vorkammerzündkerze und der Lochmittelachse (31) in einem Bereich von 30° bis 70° liegt.

2. Vorkammerzündkerze nach Anspruch 1,
- wobei der Abstand (A) in einem Bereich von 4mm bis 7mm liegt und der erste Winkel (α) in einem Bereich von 30° bis 50° liegt oder
- wobei der Abstand (A) in einem Bereich von 5mm bis 7mm liegt und der erste Winkel (α) in einem Bereich von 30° bis 40° liegt.

3. Vorkammerzündkerze nach einem der vorhergehenden Ansprüche, wobei alle Durchgangsöffnungen (30) mit ihrem jeweiligen, auf der Lochmittelachse (31) liegenden Austrittspunkt (33) in einer gemeinsamen Ebene (E) liegen.

4. Vorkammerzündkerze nach einem der vorhergehenden Ansprüche, wobei der Abstand (A) an dem Durchgangsloch (30) bestimmt wird, welches eingerichtet ist, im montierten Zustand am nächsten zu einem kegelförmigen Spray (80) aus Kraftstoff im Brennraum (11) zu liegen.

5. Vorkammerzündkerze nach Anspruch 4, wobei das Durchgangsloch (30) eingerichtet ist, im montierten Zustand derart zu einer Tumbleströmung (16) im Brennraum (11) ausgerichtet zu sein, so dass ein Teil der Tumbleströmung (16) direkt in das Durchgangsloch (30) strömt.

6. Vorkammerzündkerze nach einem der Ansprüche 4 bis 5, wobei die Lochmittelachse (31) des Durchgangslochs (30), ein Gewindeanfang (40) eines Außengewindes (4) am Gehäuse (6) und die Mittelachse (X-X) in einer gemeinsamen Ebene liegen.

7. Brennkraftmaschine, umfassend
- einen Brennraum (11),
- einen hin- und hergehenden Kolben (12),
- einen Injektor (8) zum Einbringen eines Kraftstoffs in den Brennraum (11) und
- eine Vorkammerzündkerze (1) nach einem der vorhergehenden Ansprüche.

8. Brennkraftmaschine nach Anspruch 7, wobei eine Mittelachse (81) eines kegelförmigen Sprays (80) des Injektors (8) in einem zweiten Winkel (β) zur Mittelachse (X-X) der Vorkammerzündkerze (1) in einem Bereich von 30° bis 70° liegt.

9. Brennkraftmaschine nach Anspruch 7 oder 8, wobei im Brennraum (11) eine Tumbleströmung (16) erzeugt wird, derart, dass zumindest ein Teil der Tumbleströmung (16) direkt auf dasjenige Durchgangsloch (30) der Vorkammerzündkerze (1) gerichtet ist, welches am nächsten zum kegelförmigen Spray im Brennraum (11) liegt.

10. Brennkraftmaschine nach einem der Ansprüche 7 bis 9, wobei die Vorkammerzündkerze (1) im Wesentlichen mittig am Brennraum (11) angeordnet ist und wobei der Injektor (8) seitlich zur Vorkammerzündkerze (1) am Brennraum (11) angeordnet ist.

## Claims

1. Prechamber spark plug having a central axis (X-X), comprising
- a housing (6);
- a cap (3) which at least partially defines a prechamber (2) and which has a plurality of through holes (30) that are specified to establish a connection between the prechamber (2) and a combustion chamber (11) of an internal combustion engine, wherein the through holes (3) each have a hole central axis (31),
- wherein the cap (3) on a region directed towards the housing (6) has a recess (32) which is directed radially inwards and rests against a combustion chamber-proximal end (60) of the housing (6) on the housing (6),
- **characterized in that** a spacing (A) measured parallel to the central axis (X-X) extends from an exit point (33) of a through hole (30) on the outside of the cap (3) on the hole central axis (31) to the recess (32) of the cap (3), and lies in a range from 2 mm to 7 mm; and
- **in that** a first angle (α) between the central axis (X-X) of the prechamber spark plug and the hole central axis (31) lies in a range from 30° to 70°.

2. Prechamber spark plug according to Claim 1,
- wherein the spacing (A) lies in a range from 4mm to 7mm, and the first angle (α) lies in a range from 30° to 50°; or
- wherein the spacing (A) lies in a range from 5mm to 7mm, and the first angle (α) lies in a range from 30° to 40°.

3. Prechamber spark plug according to one of the preceding claims, wherein all through openings (30), by way of their respective exit point (33) lying on the hole central axis (31), lie in a common plane (E).

4. Prechamber spark plug according to one of the preceding claims, wherein the spacing (A) is determined at that through hole (30) that in the assembled state is specified to lie closest to a conical spray (80) of fuel in the combustion chamber (11).

5. Prechamber spark plug according to Claim 4, wherein the through hole (30) in the assembled state is specified to be aligned with a tumble flow (16) in the combustion chamber (11) in such a manner that a part of the tumble flow (16) flows directly into the through hole (30).

6. Prechamber spark plug according to one of Claims 4 to 5, wherein the hole central axis (31) of the through hole (30), a start of thread (40) of an external thread (4) on the housing (6), and the central axis (X-X) lie in a common plane.

7. Internal combustion engine, comprising
- a combustion chamber (11),
- a reciprocating piston (12),
- an injector (8) for introducing a fuel into the combustion chamber (11), and
- a prechamber spark plug (1) according to one of the preceding claims.

8. Internal combustion engine according to Claim 7, wherein a central axis (81) of a conical spray (80) of the injector (8) lies at a second angle (β), in a range from 30° to 70°, to the central axis (X-X) of the prechamber spark plug (1).

9. Internal combustion engine according to Claim 7 or 8, wherein a tumble flow (16) is generated in the combustion chamber (11) in such a manner that at least a part of the tumble flow (16) is directed directly towards that through hole (30) of the prechamber spark plug (1) that lies closest to the conical spray in the combustion chamber (11).

10. Internal combustion engine according to one of Claims 7 to 9, wherein the prechamber spark plug (1) is substantially arranged so as to be centric on the combustion chamber (11) and wherein the injector (8) is disposed laterally to the prechamber spark plug (1) on the combustion chamber (11).

## Revendications

1. Bougie d'allumage de préchambre avec un axe central (X-X), comprenant
- un boîtier (6),
- un capuchon (3), qui définit au moins en partie une préchambre (2) et qui comporte plusieurs trous de passage (30) qui sont mis au point pour établir une liaison entre la préchambre (2) et une chambre de combustion (11) d'un moteur à combustion interne, les trous de passage (3) comportant chacun un axe central de trou (31),
- le capuchon (3) comportant, sur une zone dirigée vers le boîtier (6), un retrait (32) dirigé radialement vers l'intérieur, lequel repose sur le boîtier (6) sur une extrémité côté chambre de combustion (60) du boîtier (6),
- **caractérisée en ce qu'**une distance (A) mesurée parallèlement à l'axe central (X-X) s'étend depuis un point de sortie (33), situé sur l'axe central de trou (31), d'un trou de passage (30) sur le côté extérieur du capuchon (3) jusqu'au retrait (32) du capuchon (3) et se situe dans une plage de 2 mm à 7 mm, et
- qu'un premier angle (α) entre l'axe central (X-X) de la bougie d'allumage de préchambre et l'axe central de trou (31) se situe dans une plage de 30° à 70°.

2. Bougie d'allumage de préchambre selon la revendication 1,
- la distance (A) se situant dans une plage de 4 mm à 7 mm et le premier angle (α) se situant dans une plage de 30° à 50°, ou
- la distance (A) se situant dans une plage de 5 mm à 7 mm et le premier angle (α) se situant dans une plage de 30° à 40°.

3. Bougie d'allumage de préchambre selon l'une des revendications précédentes, toutes les ouvertures de passage (30) se situant, par leur point de sortie (33) respectif situé sur l'axe central de trou (31), dans un plan commun (E).

4. Bougie d'allumage de préchambre selon l'une des revendications précédentes, la distance (A) étant définie sur le trou de passage (30), qui est mis au point pour être situé, dans l'état monté, le plus à proximité d'une pulvérisation conique (80) de carburant dans la chambre de combustion (11).

5. Bougie d'allumage de préchambre selon la revendication 4, le trou de passage (30) étant conçu pour, dans l'état monté, être orienté vers un écoulement tourbillonnaire (16) dans la chambre de combustion (11) de telle manière qu'une partie de l'écoulement tourbillonnaire (16) s'écoule directement dans le trou de passage (30).

6. Bougie d'allumage de préchambre selon l'une des revendications 4 à 5, l'axe central de trou (31) du trou de passage (30), un début de filetage (40) d'un filetage extérieur (4) sur le boîtier (6) et l'axe central (X-X) étant situés dans un plan commun.

7. Moteur à combustion interne, comprenant
- une chambre de combustion (11),
- un piston (12) effectuant des mouvements de va-et-vient,
- un injecteur (8) destiné à introduire un carburant dans la chambre de combustion (11), et
- une bougie d'allumage (1) de préchambre selon l'une des revendications précédentes.

8. Moteur à combustion interne selon la revendication 7, un axe central (81) d'une pulvérisation conique (80) de l'injecteur (8) étant situé selon un deuxième angle (β) par rapport à l'axe central (X-X) de la bougie d'allumage (1) de préchambre dans une plage de 30° à 70°.

9. Moteur à combustion interne selon la revendication 7 ou 8, un écoulement tourbillonnaire (16) étant généré dans la chambre de combustion (11) de telle manière qu'au moins une partie de l'écoulement tourbillonnaire (16) est dirigée directement sur le trou de passage (30) de la bougie d'allumage (1) de préchambre, qui précisément est situé le plus à proximité de la pulvérisation conique dans la chambre de combustion (11).

10. Moteur à combustion interne selon l'une des revendications 7 à 9, la bougie d'allumage de préchambre (1) étant disposée sensiblement au centre sur la chambre de combustion (11) et l'injecteur (8) étant disposé sur la chambre de combustion (11) latéralement par rapport à la bougie d'allumage (1) de préchambre.
